# EUROPEAN PATENT APPLICATION

(11) **EP 4 818 037 A1**
(43) Date of publication of application: **07.10.2026**
(21) Application number: 25167588.0
(22) Date of filing: 31.03.2025
(51) Int. Cl.: B64C 3/56

(54) **ACTUATION AND LATCHING SYSTEM IN AN AIRCRAFT WING HAVING A FOLDABLE WING TIP, METHOD FOR EXTENDING THE FOLDABLE WING TIP PART OF AN AIRCRAFT WING, AIRCRAFT WING AND AIRCRAFT HAVING SUCH A WING**

(71) Applicant: AIRBUS Operations GmbH, 21129 Hamburg (DE); Airbus Operations Limited, Bristol BS34 7PA (GB)
(72) Inventor: WINKELMANN, Christoph, 21129 Hamburg (DE); NIENABER, Frank, 21129 Hamburg (DE); BOECKMANN, Felix, 21129 Hamburg (DE); DEMAND, John, 21129 Hamburg (DE); MORRELL, Paul, Filton, Bristol, BS34 7PA (GB); HAND, Matthew, Filton, Bristol, BS34 7PA (GB)
(74) Representative: Isarpatent

(57) **Abstract**

The present invention provides an actuation and latching system (100) in an aircraft wing (201a, b) having a fixed wing part (12) and a wing tip (11) part foldable relative to the fixed wing part (12) about a hinge axis (30) aligned perpendicular to an aircraft wing (201a, b) longitudinal axis, comprising at least one tip actuation unit (9) providing an interface between the fixed wing part (12) and the foldable wing tip (11) having hinge levers (5); at least one latching unit (7) arranged in the fixed wing part (12), wherein the at least one latching unit (7) comprises two latching bolts (8a, b) displaceable in opposite directions parallel to the hinge axis (30), wherein said latching bolts (8a, b) can be brought into engagement with the hinge levers (5) extending into the latching unit (7); a drive unit (101) arranged in the fixed wing part (12) and axially down-stream of the latching unit (7) with the drive unit (101) having at least a first drive shaft (3) coupled to the latching unit (7) and a second drive shaft (4) passing through the latching unit (7) and coupled to the tip actuation unit (9); and a control unit (13) for controlling the drive unit (101), a method for extending the foldable wing tip (11) part of an aircraft wing (201a, b), an aircraft wing (201a, b) and an aircraft (200) having such wing (201a, b) .

## Description

The present invention pertains to an actuation and latching system in an aircraft wing having a fixed wing part and a wing tip part foldable relative to the fixed wing part, a method for extending the foldable wing tip part of an aircraft wing, an aircraft wing and aircraft having a wing.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other installation environments.

There is a trend towards increasingly large passenger aircraft with higher performance efficiency (for example fuel burn reduction), for which it is desirable to have correspondingly large wing spans. However, the maximum aircraft span is effectively limited by airport operating rules which govern various clearances required when manoeuvring around the airport (such as the span and/or ground clearance required for gate entry and safe taxiway usage).

To solve this problem, it is known to provide a passenger aircraft with foldable wings. The foldable wing typically comprises an inner region and an outer region, the outer region being moveable relative to the inner region between a) a flight configuration for use during flight, and b) a ground configuration for use during ground-based operations. In the ground configuration the outer region is moved (typically rotated) relative to the inner region such that the span of the wing is reduced. Thus, the aircraft can still adhere to airport operating rules yet benefit from the larger span in flight. Some systems are using separate actuation devices for the latching and tip actuation function, i. e. for folding the wing tip and securing it in position for flight. In some of these systems at least one separate motor is used for the tip actuation while one or more motors are used for latching, or vice versa. These systems may be susceptible to a free fall scenario of the wing tip in case of a single disconnect within the drive system. The free fall scenario can therein either occur during transition of the wing tip from the retracted to the extended position or when the wing tip is folded up into the retracted position while the aircraft is parked. This requires enhanced safety activities for the operation of the aircraft on ground.

Against this background, it is an object of the present invention to find an actuation and latching system in an aircraft wing with reduced assembly complexity and increased safety during flight and ground operation.

This object is achieved by an actuation and latching system having the features of claim 1, a method for extending a foldable wing tip part of an aircraft wing having the features of claim 13, an aircraft wing having the features of claim 14 and an aircraft having the features of claim 15.

According to a first aspect of the invention, an actuation and latching system in an aircraft wing having a fixed wing part and a wing tip part foldable relative to the fixed wing part about a hinge axis aligned perpendicular to an aircraft wing longitudinal axis is provided. The system comprises at least one tip actuation unit providing an interface between the fixed part and the foldable wing tip and having at least two hinge levers; at least one latching unit arranged in the fixed part, wherein the latching unit comprises two latching bolts displaceable in opposite directions parallel to the hinge axis, wherein said latching bolts can be brought into engagement with the hinge levers or lugs provided in end portions of the hinge levers extending into the latching unit and positioned on both sides of the latching unit; a drive unit arranged in the fixed part and axially downstream of the latching unit with the drive unit having at least a first drive shaft coupled to the latching unit and a second drive shaft passing through the latching unit and coupled to the tip actuation unit; and a control unit for controlling the drive unit. Although the system is described in the context of a single aircraft wing, it is obvious that in an aircraft, each wing is equipped with such a system. Depending on the design and/or size of the aircraft wing, there may also be two or more tip actuation units and/or latching units or systems according to the invention be provided per wing. The levers transfer bending moments at the wing tip when turned around the hinge axis or hinge line. The system according to the invention uses only one drive motor for the tip actuation, i.e. articulation or folding of the wing tip into a hinged position on ground and for the latching function when the wing tip is in the extended position. The levers extend between a hinge line and a latch line of the system and are moved into the fixed wing part for latching the wing tip in the extended position. To engage with the latching bolts of the latching unit each lever extending in the latching unit may comprise a lug configured to allow passing of the latching bolts, preferably in or annexed to its end portion. If two or more levers are provided, those provide a lug stack engageable with the latching bolts on both sides of the latching unit. The invention is not limited to the use of two levers. Embodiments of the tip actuation unit comprising a stack of two or more levers extending on either side of the latching unit in the latched position are also encompassed. The latching bolts are then guided through the stack of lugs provided in the end portion of each of the group or stack of levers when moved into the latched position. Using a plurality of levers has the advantage of providing an increased amount of available load paths. In some embodiments the levers may comprise additional lugs configured and positioned to also latch the wing tip in the retracted, i.e. folded position vis the latching unit. The configuration as disclosed herein is provided in each of the aircraft wings having a fixed wing part and a wing tip part foldable relative to the fixed wing part about a hinge axis and has the advantage to reduce complexity of the system including a reduced number of sensors, motors, motor control devices, such as valve blocks or motor control electronics. The simplification to only one motor improves the reliability, availability, maintainability, cost, and weight of the system by also reducing sensors and mechanical drive elements.

A further aspect of the invention lies in a method for extending the foldable wing tip part of an aircraft wing comprising the actuation and latching system according to the invention, from a retracted position into an extended position. The method comprises: engaging the brake unit of the first drive shaft and disengaging the brake unit of the second drive shaft; driving the tip actuation unit to move the foldable wing tip part from the retracted position to the extended position; engaging the brake unit of the second drive shaft and disengaging the brake unit of the first drive shaft; driving the latching unit and moving the latching bolts into the hinge levers or stacks of hinge levers, in particular into lugs or lug stacks provided therein; engaging the brake unit of the first drive shaft after receiving in the control unit a latching position signal from the latching position sensors of the latching bolts and the latch drive position sensor annexed to the first shaft and; depowering the hydraulic or electrical motor. The method of the invention allows for extending the foldable wing tip based on a precisely coordinated sequence that is realised by the integrated actuation and latching system, wherein the movement of the wing tip is controlled by a single motor that serves both purposes, i.e. tip actuation and latching. The use of sensory feedback (e.g. via locking position sensors, latching position sensors, latch drive position sensor, tip drive position sensor and hinge position sensor) and targeted brake switching enables redundant and precise monitoring of the folding and latching status as well as of locking of the latching bolts by dedicated locking mechanisms. This approach reduces system complexity, weight and the number of components required, leading to greater reliability and lower maintenance costs.

A further aspect of the invention lies in an aircraft wing having a fixed wing part and a wing tip part foldable relative to the fixed wing part and comprising an actuation and latching system according to the invention. It is an idea of the invention to use a larger wingspan in flight, while the wing tip section can be folded up on the ground to comply with airport regulations. Combining actuation and latching into one system reduces mechanical complexity, resulting in higher reliability, lower maintenance costs and increased operational safety, in particular due to using sensory feedback, e.g. via locking position sensors, latching position sensors, latch drive position sensor, tip drive position sensor and hinge position sensor described in more detail hereinafter and enabling redundant and precise monitoring of the folding, latching and locking status. Overall, the invention connects aerodynamic efficiency in flight with optimal ground compatibility.

A further aspect of the invention lies in an aircraft having an aircraft wing according to the invention. The wing consists of a fixed main section and a hinged wingtip section that is controlled by the actuation and latching system. This allows the wing tip to be fully deployed in flight for aerodynamic efficiency and folded on the ground to meet structural requirements and space constraints.

Advantageous embodiments and further developments are apparent from the further dependent claims and from the description with reference to the figures.

According to an embodiment of the wing tip actuation and latching system, the drive unit comprises a hydraulic motor provided with a valve block and a valve control unit, and/or an electric motor provided with a motor control electronics. The drive unit being designed to use either a hydraulic motor and/or an electric motor to perform the required functions allows for flexible adaptation to different system requirements in terms of performance, reliability, weight, and integration into the overall aircraft architecture. In the hydraulic variant, a hydraulic motor can be used that is centrally integrated into the system architecture. The motor is controlled by a valve block that is either integrated into the hydraulic motor or positioned adjacent thereto and allows for precisely regulating the hydraulic flow - i.e. both the driving direction and speed. The valve control unit therein controls the hydraulic flow by activating the valve block, enabling the motor to transfer power to both drive shafts (for the latching and actuation functions) as needed. This allows for precise coordination of the system functions and ensures an even load distribution. The valve control unit can be integrated into the higher-level flight control system, e.g. via a data bus and ensures that operating parameters such as hydraulic pressure, motor speed and brake status are continuously monitored. Alternatively, the drive unit can be implemented in the form of an electric motor. In this variant in particular a brushless DC motor can be used in combination with the motor control electronics. Use of axial flux motors controlled via field-oriented control using an inverter or asynchronous or induction motors controlled by a frequency converter with voltage -frequency control or field-oriented control is also encompassed. The motor control electronics ensures precise control of the motor speed and torque, so that both the folding movement of the wing tip and the latching mechanism can be precisely controlled. The motor control electronics can be fully integrated into electrical control system of the aircraft and communicate with the central flight control system via standardised bus systems (e. g. an AFDX micro data bus). This allows for continuously monitoring parameters such as motor status, position, and speed signals. As a further advantage, the elimination of hydraulic components such as valve blocks and hydraulic lines can significantly reduce the overall weight. In some embodiments hybrid drives, combining hydraulic and electric motors may be used depending on the requirements and system configurations.

According to an embodiment of the invention, the first and second drive shaft are each comprising a brake unit arranged in or adjacent to the drive unit. The integration of the brake units on the drive shafts allows for selectively blocking specific functional sections during operation. For example, the brake mechanism of the first shaft (latching shaft) can be activated when the wing tip section moves into the extended configuration, while the brake mechanism of the second shaft (tip actuation shaft) is released to enable movement of the wing tip section. Conversely, when the wing tip section is latched, the brake of the second shaft is activated to prevent unwanted movement. This targeted control is crucial to ensure that the system is in defined operating states and to avoid unwanted back driving. The immediate arrangement of the brake units in or next to the drive unit shortens the distance between the drive source and the brake mechanism. This enables a fast response time, which is particularly important during dynamic load changes in the folding and extending process. The independent control of the brakes on the respective drive shafts allows the system to quickly switch between latching and actuation functions, improving positioning and operation of the wing-tip section. Immediate brake activation at critical phases prevents uncontrolled movements and reduces the risk of component damage or safety hazards, especially during transition between flight and ground configurations. Placing the brake units in proximity to the drive unit minimises cabling and assembly work, resulting in a more robust and maintenance-friendly design.

According to a further embodiment of the invention the drive unit comprises a differential gear that allows torque distribution between the first and second shafts, and wherein the differential gear preferably comprises an overload protection device comprising in particular one of a slip clutch and a torque limiter. In a preferred embodiment of the invention, the drive unit is realised in such a way that both drive shafts - the first shaft driving the latching unit and the second shaft driving the tip actuation unit - are each equipped with brake units, which are either integrated directly into the drive unit or in the immediate vicinity of the drive unit. This allows for selective and independent blocking of the respective function, so that during the switchover process it is possible to control exactly which shaft is actively driven and which is blocked. In addition, the drive unit comprises a differential gear that distributes the torque generated by the motor between the first and second shafts. This has the advantage of allowing for compensation of load fluctuations and varying mechanical stresses between the two functional branches. The differential gear contributes to a smooth power transmission and supports a smooth transition between the operating modes (e.g. from actuation to latching and vice versa). The differential gear can be equipped with overload protection. In particular either a slip clutch or a torque limiter can be used as a protective device, without limiting the invention thereto. The overload protection devices prevent the torque from being transmitted to the connected components beyond a defined maximum in the event of sudden load peaks or unexpected mechanical faults. This avoids damagingly exceeding the load limits, which significantly increases the operational safety of the overall system, particularly in critical phases of the folding process or during emergency shutdowns. The integrated solution offers advantages in terms of both space savings and the fast response of the braking and drive components. The proximity of the brake units to the drive unit reduces the transmission paths, thus enabling very precise and timely switching between the various functional states. At the same time, the differential gear with integrated overload protection ensures that the safety of the entire actuation and latching system is maintained in the event of mechanical failures or unforeseen load changes.

According to a further embodiment of the invention, the latching unit comprises at least two latching actuators each having a hollow screw shaft connected to the latching bolts, wherein the hollow screw shaft is configured to axially drive the latching bolt into and out of a latching position in the hinge levers by rotating the screw shaft. The arrangement provided by the system of the invention enables precise, repeatable, and controlled positioning of the latching bolts, which is crucial for the safe operation of the foldable wing tip. Redundancy is achieved by using at least two latching actuators. If one actuator fails or malfunctions, the other actuator can continue to safely control the latching process. This modular architecture increases operational reliability and reduces the risk of a complete system failure. Beside monitoring the latching unit via a latch drive position sensor annexed the first drive shaft in the drive unit, the design of the hollow screw shafts allows the integration of latching position sensors, which detect the exact latching state of each latching bolt. In addition, some embodiments include additional mechanical monitoring devices that point to potential faults at an early stage by detecting lateral play or an overload signal. This means that irregularities in the axial force transmission can be detected. The use of a hollow screw shafts advantageously enables a compact design of the latching actuators, thus minimising the space required in the aircraft structure and reducing weight. The compact integration also supports assembly and maintenance within the aircraft assemblies. In addition to the screw mechanism, quick-release couplings or splines can be integrated into the latching actuators to enable quick replacement or adaptation to different design requirements. This increases the flexibility of system integration into different wing box designs. The actuators can be designed to allow for small lateral tolerances, which has the advantage of compensating for structural deformations that may occur during flight operations or as a result of load changes. The adaptability achieved in this way helps to ensure that the wingtip section remains securely latched. By providing a respective lever or lug design, the latching unit may also be configured to allow for securing the wing tip in the parked position and will exclude a free fall of the wing tip due to a single disconnect while folded. This will improve the operating characteristic of the aircraft by avoiding the risk of passenger injuries during the boarding process or of ground personnel during aircraft handling.

According to a further embodiment of the invention each of the latching actuators comprises a first locking mechanism provided with a spring-loaded cam lock coupled to a latching actuator and arranged perpendicular to the hollow screw shaft with the cam lock configured to lock the latching pin in a latched position after latching by rotating a rotatable cam into a locking position at the hollow screw shaft. In addition, or as an alternative embodiment, a second locking mechanism, provided with a spring-loaded locking pin moveable in a direction perpendicular to the latching bolt wherein the locking pin is configured to lock the latching bolt in a latched position by engaging with the rear end of the latching bolt, when in the latched position. Each latching actuator is equipped with a hollow screw shaft that moves the latching bolt axially via a threaded rod. The spring-loaded cam locking mechanism is integrated perpendicular to the hollow screw shaft. The locking mechanism are activated by an assigned locking actuator, which can be controlled hydraulically or electrically. When activated, a movable cam, such as a rotatable cam or cam block rotates into a defined locking position so that it rests against the hollow bolt shaft to mechanically lock it. This locking action secures the latching bolt in the latched state and prevents unwanted axial movement under load. The use of a spring-loaded cam locking mechanism enables a precise and repeatable locking action, wherein the spring force always ensures retraction into the secured state. This minimises the risk of accidental unlocking - even in the event of an electrical or hydraulic control failure. The perpendicular arrangement to the hollow screw shaft also results in compact integration within the latching unit. In the alternative or supplementary option, a second mechanism is provided in each latching actuator that uses a spring-loaded locking pin. The locking pin is thereby arranged to move in a direction perpendicular to the axis of the latching bolt. When the locking pin is moved to a predefined position by the associated mechanism such as the same or a further locking actuator, it engages in a dedicated groove or recess on the latching bolt. This provides the bolt with additional mechanical fixation. The redundant locking mechanisms provide an additional level of security. Even if the first mechanism, i.e. the cam lock does not work properly - for example, due to a failure or mechanical play problems - the spring-loaded locking pin can reliably hold the latching bolt in the secured position or vice versa. This dual protection is particularly important in safety-critical applications, such as those found in foldable aircraft wings.

According to a further embodiment of the invention, each of the first and second locking mechanisms comprises locking position sensors configured to detect one of a locked and unlocked positions of the cam locks and/or the locking pins. In the first locking mechanism, which operates by means of a spring-loaded cam lock, a locking position sensor is integrated that detects whether the rotatable cam or cam has moved into the locking position. The sensor provides a clear digital signal to the control unit so that the status (locked or unlocked) can be monitored in real time. In the alternative or supplementary second locking mechanism, which uses a spring-loaded locking pin, a corresponding sensor is provided. This sensor detects whether the pin has correctly engaged in the intended locking position, thus contributing to the alternative or redundant monitoring of the locking process. The respective sensors allow to determine during operation whether the cam locks or locking pins are correctly fixed or whether there is a fault that could lead to improper latching. Monitoring both mechanisms with sensors has the advantage of creating redundant or supplemental layers of security. If a sensor fails or delivers an incorrect signal, parallel monitoring by the other mechanism enables early error diagnosis and, if necessary, the automatic initiation of safety measures by the central control unit.

According to a further embodiment of the invention the second shaft comprises a first shaft section extending between the drive unit and the latching unit and a second shaft section extending between the latching unit and the tip actuation unit, wherein a gear unit is provided in the latching unit comprising a helical gear positioned concentrically with one of the latching actuators and configured to mesh with bevel gears at each of the first and the second shaft section abutting with the gear unit. The combination of the bisection of the second shaft and the integrated bevel gear unit ensures precise synchronisation of the mechanical drive impulses, reduces mechanical losses, and minimises play in the connecting elements. The bevel gear unit housed in the latching unit saves space, which is particularly advantageous in the confined spaces of aircraft by allowing for passing the second shaft through the latching unit without a requirement of additional gearing to bypass the latching unit in the assembled state. This thus supports a compact design an in-line integration of the drive unit, the latching unit, and the tip actuation unit.

According to a further embodiment of the invention the tip actuation unit is provided with at least one geared rotary actuator having at least one attachment element attached to the fixed part, at least one, preferably at least two hinged output lever connected the foldable wing tip and at least two independent power stages coupled by a through shaft and a second bevel gearbox connectable to a first end of the through shaft and meshing with a bevel gear at the second shaft, wherein the tip actuation unit is configured to move the wing tip from a retracted to an extended position and vice versa. The at least one geared rotary actuator with an integrated gearbox allows for speed and torque control while the at least one attachment element is attached to the fixed wing to provide a stable mounting for the actuator and to ensure a permanent connection between the static and moving structures. At least one, but preferably at least two hinged output levers, are coupled to the actuator. These output levers transfer the rotational movement generated by the actuator into a corresponding lever movement that moves the wing tip to the desired position. The hinge connections thereby enable a flexible transition and compensate for differences in movement that may arise from structural tolerances or load changes. To implement two independent power paths, at least two separate power stages are implemented that are coupled via a through shaft. A second bevel gear is attached to one end of this through shaft and meshes with a bevel gear at the opposite end of the shaft. This gearing ensures that the torque is distributed symmetrically between the two power paths. The combination of a geared rotary actuator with hinged output levers provides highly accurate control of the wing tip motion. The mechanical translation of rotary motion into linear lever motion minimises mechanical losses and enables exact position settings. The distribution into at least two independent power paths ensures that the torque is optimally distributed. This redundancy supports a reliable movement of the wing tip even in the event of partial failures or varying load conditions. The integrated design of the latching unit and tip actuation unit, including the fastening element on the fixed wing part, the continuous shaft and the second bevel gear has the further advantage of saving installation space. The modular design of the tip actuation unit connecting to the hinged output levers, provides dynamically adaptable motion of the wing tip. At the same time, vibrations and unwanted motions are minimised, increasing the overall safety of the system of the invention.

According to a further embodiment of the actuation and latching system the tip actuation unit comprises at least one safety brake attached to a second end of the through shaft and wherein the safety brake is configured in particular as a friction disc brake or a tooth clutch brake allowing for dynamic braking operation. This safety brake, which can be configured either as a friction disc brake or as a tooth clutch brake without limiting the invention thereto, can be used for dynamic braking of the wing tip section and contributes significantly to increasing operational safety. The secondary or safety brake is mechanically attached to the other end of the shaft that transmits power from the drive system (via the latching unit) to the tip actuation unit and is preferably aligned with the hinge axis. During normal operation, this brake remains inactive to allow free movement of the wing tip assembly. However, when a dynamic braking event is initiated - such as a drive fault or an uncontrolled overspeed condition - the brake is activated to provide controlled deceleration or complete stop of the system. In the disc brake version, a friction element is pressed against the surface of the shaft passing through it. An electric or hydraulic actuator can be used herein to variably control the braking force, so that the braking effect is dynamically adapted to the current operating conditions. Alternatively, the tooth clutch brake, also referred to as gear rim brake, variant uses a set of gear rim profiles that engage when activated. The precise engagement of the tooth elements not only achieves a safe braking effect, but also allows the wing tip part to be positioned in a defined way to support the transition to the safe state. The safety brake advantageously enables a dynamic braking process in which the braking force is controlled depending on the current speed and the loads that occur. This results in a precise and controlled deceleration of the wing tip, which is particularly important in critical operating phases. By placing the safety brake directly at the second end of the through-shaft, the braking force is applied directly where it can be most effectively used to control motion of the wing tip section. This reduces the need for additional braking components and advantageously simplifies the system architecture. The dynamic braking function ensures that, in the event of a failure of the active drive or latching components, a redundant safeguard is in place to prevent uncontrolled movement or even a free fall of the wing tip.

According to a further embodiment the hinge axis is provided with a hinge position sensor. The hinge position sensor can continuously detect the angle or position of the movable wing tip section relative to the fixed wing section. This ensures that the folding mechanism can be monitored and controlled and hence precise movements during the transition between the retracted or folded and extended positions and that deviations can be detected at an early stage. The sensor is preferably attached in the immediate vicinity of or directly on the hinge axis. This direct placement allows for measurements being taken almost in real time, enabling the central control unit to react immediately to any position deviations. In some embodiments, the hinge position sensor can be implemented as a rotary encoder (e.g. as a resolver or incremental encoder), which provides reliable data even under challenging conditions, such as vibrations or temperature fluctuations.

The hinge position sensor can be integrated into the higher-level sensor and control system of the system of the invention and enables, in coordination with other position sensors (e.g. sensors on or annexed to the shafts of the latching unit and the tip actuation unit), redundant monitoring of the entire folding mechanism and actuation system. This multiple measurement advantageously increases operational reliability, as a failure or faulty measurement of one sensor can be compensated for by the others. The hinge position sensor ensures that any deviation from the setpoint is immediately detected and transmitted to the central control unit. This allows for quick initiation of corrective action before a safety-critical fault occurs.

According to a further embodiment of the system a latching drive position sensor is provided at the first shaft and a tip drive position sensor is provided at the second shaft. In this embodiment the sensors are integrated in such a way that a latching drive position sensor is provided on the first drive shaft (which primarily operates the latching function) and a tip drive position sensor on the second drive shaft (which controls the wing tip actuation). The latching drive position sensor detects the position of the latching mechanism by measuring whether the latching bolts are driven in the correct (latched) position. The detected position data enables the control unit to monitor the latching process, detect errors (such as a latching bolt that is not fully engaged or broken) at an early stage and initiate corrective measures if necessary. This ensures that the foldable wing tip remains in the secure state, which is particularly important during critical phases such as take-off and landing or operation on ground. The tip drive position sensor continuously measures the angular or positional change of the wing tip section that is controlled by the second drive shaft. This feedback allows for precise control of the movement from retracted to extended state and vice versa. This means that the control of the actuator can be optimally adapted to the current wing configuration, resulting in improved safety. It is an advantage that the integration of both sensors enables continuous monitoring of the critical positions in the latching and actuation process. By precisely detecting the latching bolt and tip positions, the central control unit can quickly react to any deviations and thus ensure the safe operation of the foldable wing system. Each of the latching drive sensor as well as the tip drive sensor is positioned directly on the respective drive shafts in the drive unit, minimising cabling, and enabling measurements to be taken almost in real time. This compact integration meets the requirements for a space- and weight-optimised design, improving both the maintainability and the reliability of the overall system. The feedback from the latching drive and tip drive position sensors makes it possible to detect discrepancies or faults at an early stage - for example, if one of the latching bolts or both is/are not fully engaged, or the wing tip does not reach the target position during extending or folding. This helps to initiate safety measures at an early stage and minimises the risk of uncontrolled system behaviour and can avoid free fall scenarios.

The invention will be explained in greater detail with reference to exemplary embodiments depicted in the drawings as appended.
- Fig. 1: depicts a diagram of a system according to an embodiment of the invention;
- Fig. 2: depicts a further diagram of an aspect of the system according to an embodiment of the invention;
- Fig. 3: depicts a sectional view of a latching and locking unit in a system according to an embodiment of the invention;
- Fig. 4: depicts a sectional perspective view of a latching and locking unit in a system according to a further embodiment of the invention;
- Fig. 5: schematically depicts an aircraft according to an embodiment of the invention; and
- Fig. 6: depicts a flow chart of the method for extending the wing tip according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

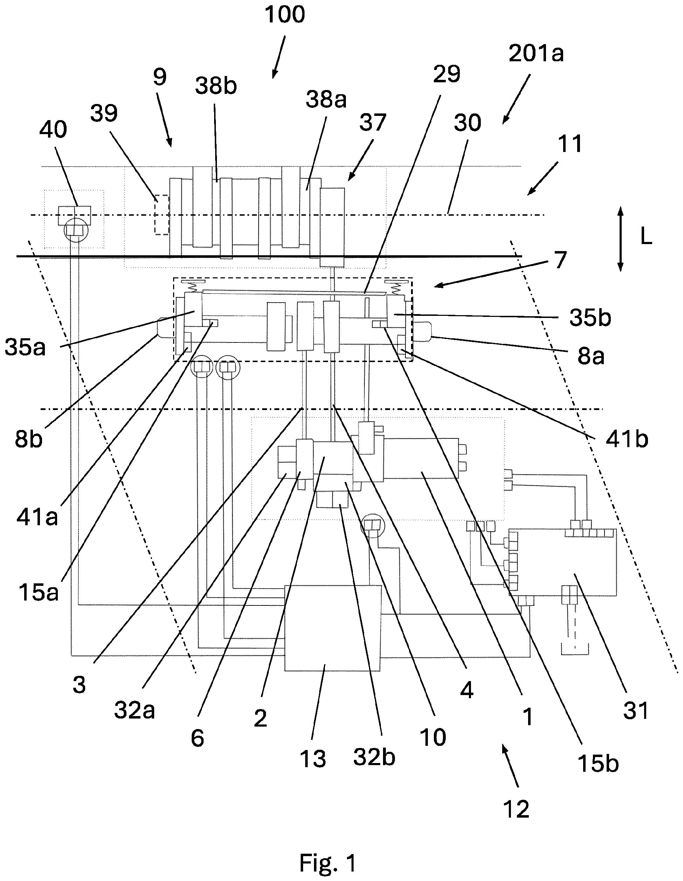

Fig. 1 schematically depicts a diagram of an actuation and latching system 100 according to one embodiment of the invention. Fig. 1 illustrates a section of an aircraft wing 201a, b with a fixed wing part 12 and a wing tip 11 part foldable relative to the fixed wing part 12 about a hinge axis 30 aligned perpendicular to an aircraft wing 201a, b longitudinal axis L. In the system 100 a motor 1 provides the drive power (hydraulic or electric) and is coupled to differential gear 2. The differential gear 2 receives the torque from motor 1 and distributes it to the two drive shafts 3, 4. Therein the power is divided into two functional flows. The first drive shaft 3 transmits the torque from differential gear 2 to the latching unit 7. The first drive shaft 3 controls the movement of the latching bolts 8a, b, which engage with the hinge levers 5 or lug stacks 14 (not shown) in the latched position. The torque can also be transmitted to the tip actuation unit 9 via the second drive shaft 4. A first brake unit 6 is integrated into the first drive shaft 3. A second brake unit 10 is attached to the second drive shaft 4 in the same way, to precisely move and secure the wing tip 11. The latching unit 7 as supplied by the first drive shaft 3 houses the mechanisms that control the latching process. The latching bolts 8a, b are integrated into the latching unit 7, which causes secure engagement in the hinge levers 5 or lug stacks 14. The latching bolts 8a, b are controlled by the latching unit 7 and move along a predetermined path perpendicular to the longitudinal axis L to establish firm mechanical contact in the hinge levers 5 or lug stacks 14. The tip actuation unit 9 forms the interface between the fixed wing part 12 and the movable wing tip 11. It is driven by the second drive shaft 4 enabling the movement of the extending and retracting part. The hinge levers 5 (not shown), which are arranged at the transition zone between the fixed wing part 12 and the wing tip 11, receive the mechanical engagement of the latching bolts 8a, b, in particular in lugs or a lug stack 14 provided in the levers 5. The latter thus ensure that the wing tip 11 is securely latched. The tip actuation unit 9 is provided with at least one geared rotary actuator 37 attached to the fixed wing part 12, at least two hinged levers 5 connected the foldable wing tip 11 and at least two independent power stages 38a, b for moving the wing tip 11 from a retracted to an extended position and vice versa. A safety brake 39 is provided in the tip actuation unit 9 and configured as a friction disc brake or a tooth clutch brake allowing for dynamic braking operation. The safety brake 39 is used for dynamic braking of the wing tip 11 and contributes significantly to increasing operational safety. The safety brake 39 is mechanically attached to the geared rotary actuator 37 of the tip actuation unit 9. During normal operation, this safety brake 39 remains inactive to allow free movement of the wing tip 11. However, when a dynamic braking event is initiated - such as a drive fault or an uncontrolled overspeed condition - the safety brake 39 is activated to provide controlled deceleration or complete stop of the system.

The hinge axis 30 is provided with a hinge position sensor 40 that continuously detect the angle or position of the movable wing tip 11 relative to the fixed wing part 12. This hinge position sensor 40, which is aligned with the hinge line, allows monitoring of the folding mechanism and movement during the transition between the retracted or folded and extended position and allows for detecting operational deviations at an early stage.

Latching position sensors 41a, b are provided in the latching unit 7 that monitor the actuation of the latching actuators 19a, b and/or position of the latching bolts 8a, b. At the first drive shaft 3 a latching drive position sensor 32a and at the second shaft 4 a tip drive position sensor 32b is provided. While the latching position sensors 41a, b detect the position of the latching mechanism by measuring whether the latching bolts 8a, b are in the correct (latched) position within the latching unit 7, the latching drive position sensor 32a continuously monitors the positional changes or rotation of the first drive shaft 3. The detected position data enables the control unit 13 to monitor the latching process, detect errors (such as a pin 8a, b that is not fully engaged or broken) at an early stage and initiate corrective measures if necessary. This ensures that the foldable wing tip 11 remains in the secure state, which is particularly important during critical phases such as take-off and landing or operation on ground. The tip drive position sensor 32b continuously measures the angular or positional change of the wing tip 11 by monitoring the second drive shaft 4 in connection with the hinge position sensor 40. The feedback received from the sensors allows for precise control of the movement of the wing tip 11 from retracted to extended state and vice versa. The control unit 13 is linked to the main components of the system. It coordinates the operation, monitors the signal flows, and controls the activation of the actuation, latching, braking, and locking mechanisms. In the embodiment of Fig. 1, a valve block 31 is coupled with the hydraulic motor 1. The valve block 31 is either integrated into the hydraulic motor 1 or positioned adjacent thereto and allows for precisely regulating the hydraulic flow - i.e. both the driving direction and speed. The control unit 13 therein controls the hydraulic flow by activating the valve block 31, enabling the motor to transfer power to both drive shafts 3, 4 for the latching and actuation functions, as needed. The system operation is divided into two main phases - extension and retraction of the wing tip 11. Initially, the first brake unit 6 of the latching unit 7 is activated, and the second brake unit 10 of the tip actuation unit 9 is deactivated. Motor 1 drives the system, wherein the torque is transmitted via differential gear 2 to the second drive shaft 4 and then to the tip actuation unit 9. The wing tip 11 initially moves at a low speed to ensure a smooth transition from the retracted to the extended position. As the wing tip 11 moves from the retracted to the extended position, motor 1 increases the speed to ensure a smooth transition. As soon as the wing tip 11 almost reaches the extend end stop, the second brake unit 10 on the second drive shaft 4 applies targeted braking. After the extend end stop has been touched, motor 1 continues to drive the system to a defined tip position, to create a pre-tension in the drive system. At this moment, the second brake unit 10 is fully activated on the tip actuation unit 9, so that the preload created is secured and the wing tip 11 is prevented from moving under external loads. With the preload secured, the transition to the latching process takes place. Via the first drive shaft 3, the torque is directed to the latching unit 7. The second brake unit 10 remains active while the first brake unit 6 of the latching unit 7 on the first drive shaft 3 is deactivated, so that the latching bolts 8a, b are inserted into the predetermined lug stack 14 of the hinge levers 5 (not shown). The latching position sensors 41a, b monitor this process and confirm whether the latching bolts 8a, b are fully and correctly engaged. Once both latching position sensors 41a, b have signalled a successful latching state, the first brake unit 6 is reactivated, and motor 1 is switched off. The retraction process is essentially the reverse of the extension process. After leaving the extend end stop and an initial phase at low speed, motor 1 is reactivated to transfer the system to the retracted state. The tip actuation unit 9 is controlled via the second drive shaft 4, wherein the latching process is reversed by a corresponding switchover of the brake units 6, 10. Here, too, motor 1 first accelerates and then decelerates in a targeted manner so that the position is precisely locked by the second brake unit 10 before reaching the retracted end stop.

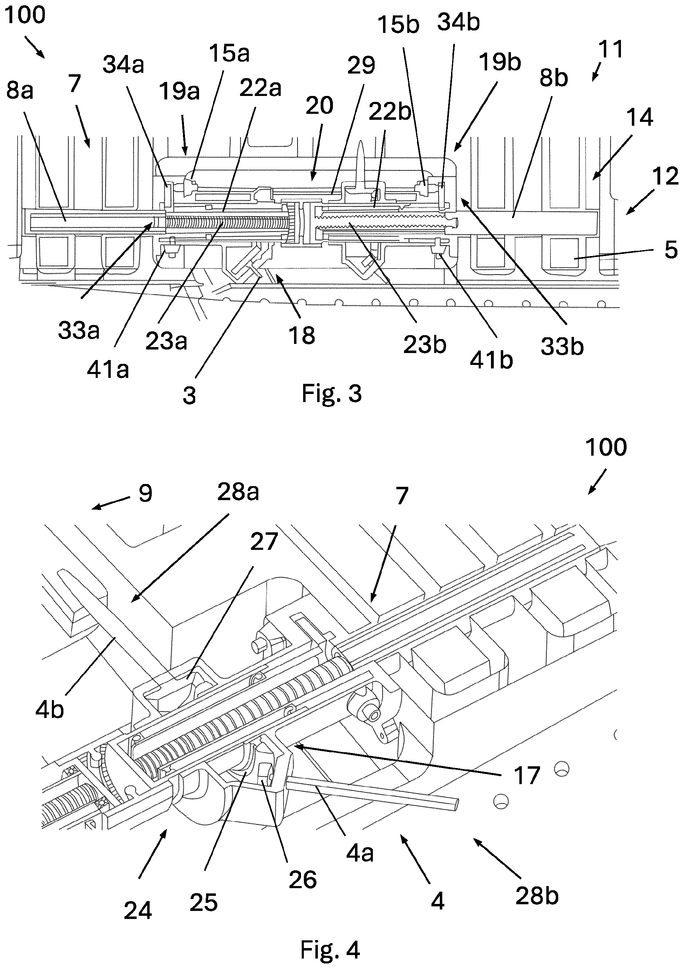

After completed positioning of the latching bolts 8a, b in the latched position, locking mechanisms are activated. These locking mechanisms are configured to comprise spring-loaded locking pins 35a, b or spring-loaded cam locks 33a, b (cf. Fig. 3) coupled to the shaft of a locking actuator 29 and arranged perpendicular to the hollow screw shafts 22a, b (cf. Fig. 3). The spring-loaded locking pins 35a, b as illustrated as an example in the embodiment of Fig. 1, are moveable in a direction perpendicular to the latching bolts 8a, b and configured to lock the latching bolts 8a, b by engaging with the rear end of the latching bolt 8a, b in the latched position. The system 100 can be provided with redundancy with respect to the locking mechanisms to provide an additional level of security. Even if the first mechanism does not work properly - for example, due to a failure or mechanical play problems - the second mechanism can reliably hold the latching bolts 8a, b in the secured position. As illustrated in the embodiment of Fig. 1 the locking mechanism comprises locking position sensors 15a, b configured to detect one of a locked and unlocked position of the locking pins 35a, b. The sensors provides a clear digital signal to the control unit so that the status (locked or unlocked) can be monitored in real time. In the embodiment of Fig. 3 which illustrates the alternative or supplemental use of spring-loaded cam locks 33a, b locking position sensors 15a, b are provided detecting whether the cams 34a, b have correctly engaged in the intended locking positions, thus contributing to the alternative or redundant protection monitoring of the locking process.

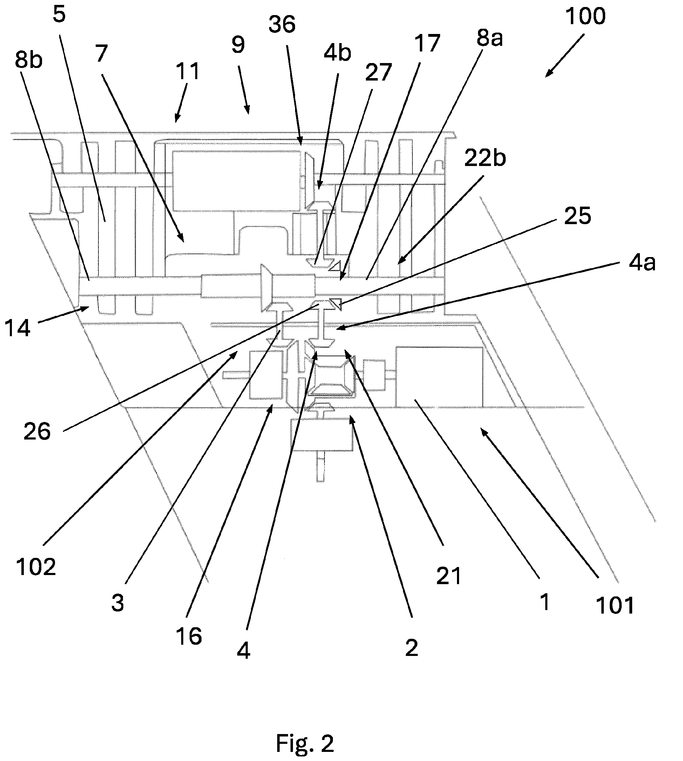

Fig. 2 schematically depicts a further diagram of an aspect of the actuation and latching system 100 according to an embodiment of the invention. Fig. 1 shows a central drive unit 101 comprising the motor 1, either a hydraulic, electric or hybrid motor 1, transmitting drive power into two separate drive shaft paths via a differential gear 2, wherein each of the two drive shafts 3, 4 controls different functions of the actuation and latching system 100. The motor 1 supplies the drive power and feeds the differential gear 2. The differential gear 2 is the central element of the drive train 102, which simultaneously distributes the torque generated by the motor 1 via two separate outputs. Within the drive unit 101, the torque is distributed via the differential gear 2. A first gearbox 16 configured as bevel gear box, ensures synchronised power transmission to the first shaft 3, which leads to the latching unit 7. The second drive shaft 4, which drives the tip actuation unit 9 is driven via the second gearbox 21. This allows the latching operations and the movement of the wing tip 11 to be actuated by the same motor 1.

The first output leads via the first drive shaft 3 to the latching unit 7. In the latching unit 7, the latching bolts 8a, b are activated, which engage with the lug stacks 14 of the hinged levers 5 to latch the wing tip 11 in the extended position. The second output of the differential gearbox 2 transmits the torque via the second drive shaft 4 to the tip actuation unit 9, which effects extending and retracting of the wing tip 11 via geared rotary actuators 37 (not shown) comprising a fourth gear box 36. Fig. 2 shows an internal gear unit 17 arrangement within the latching unit 7 that allows the second drive shaft 4 to pass through the latching unit 7 and which is arranged in the same plane as the drive unit 101 and the tip actuation unit 9. The second drive shaft 4 is divided into two separate shaft sections 4a, 4b. The internal gearbox 17 in the latching unit 7 is integrated between these shaft sections 4a, 4b. The internal gear unit 17 comprises a helical gear 25 arranged perpendicular with respect to the hollow screw shaft 22b that couples the two shaft sections 4a, 4b and guides the torque via the first and second bevel gears 26, 27 provided thereon meshing with the helical gear 25 positioned perpendicular to the first and second bevel gear 26, 27 and concentrically with the hollow screw shaft 22b of the latching unit 7, so that it is transmitted to the tip actuation unit 9.

Fig. 3 depicts a sectional view of a latching unit 7 in a system 100 according to an embodiment of the invention as provided in the fixed wing part 12. Fig. 3 illustrates how the torque is transmitted from the first drive shaft 3 - which receives the torque from the motor 1 via the differential gear 2 - to the latching actuators 19a, b via a connection element 20 connecting facing ends of the hollow screw shafts 22a, b. Inside the latching unit 7, the torque is distributed via a concentrically arranged third gearbox 18, so that it is delivered synchronously to the connected two latching actuators 19a, b. Each latching actuator 19a, b comprises a hollow screw shaft 22a, b designed to rotate the associated latching bolts 8a, b axially into the intended position in the lug stack 14 of the hinged levers 5 extending into the latching unit 7. As the hollow screw shafts 22a, b are turned, the latching pins 8a, b are displaced in opposite direction due to the rotary movement via the threaded rods 23a, b positioned inside the hollow screw shafts 22a, b, and moved into the lug stacks 14 of the hinge levers 5, thereby achieving secure mechanical engagement and thus latching of the wing tip 11. Each of the latching actuators 19a, b comprises a locking mechanism provided in this embodiment with a spring-loaded cam locks 33a, b coupled to a shaft-like locking actuator 29 extending between the cam locks 33a, b. The cam locks 33a, b are arranged perpendicular to the hollow screw shafts 22a, b with the cams 34a, b configured to lock the latching bolts 8a, b after latching, by rotating rotatable cams 34a, b into a locking position at the hollow screw shaft 22a, b. In addition, a second locking mechanism could be provided with spring-loaded locking bolts 35a, b (cf. Fig. 1) moveable in a direction perpendicular to the latching bolts 8a, b and configured to lock each latching bolt 8a, b in a latched position after latching. The locking mechanism comprises locking position sensors 15a, b annexed to the cam locks 33a, b. Furthermore, latching position sensors 41a, b adjacent to the latching bolts 8a, b are provided as additional sensor means for monitoring the latching process.

The arrangement shown in Fig. 3 also illustrates how a third gearbox 18, acting as a connection between the first drive shaft 3 and the hollow screw shafts 22a, b of the latching actuators 19a, b ensures synchronised operation of both latching bolts 8a, b via the connection element 20. This results in a synchronised latching of the wing tip 11 in the fixed wing part 12. Tolerances and displacements within the latching unit 7 are also considered, so that the drive path is designed to be robust and error-free.

Fig. 4 depicts a sectional perspective view of a latching unit 7 in a system 100 according to a further embodiment of the invention, illustrating a further aspect of the system 100. The central focus of this illustration is the transmission device 24, also referred to as cross-over-device, which is allows for guiding the second shaft 4 through the latching unit 7 via an internal gear unit 17. The transmission device 24 is integrated into the latching unit 7 and redirects the drive force coming from the differential gear 2 via the second drive shaft 4 having a first and second shaft section 4a, b. For this purpose, the internal gear unit 17 of the transmission device 24 comprises a helical gear 25 that changes the direction of the torque and simultaneously establishes the mechanical connection between the shaft sections 4a, b and the tip actuation unit 9. The arrangement shown in Fig. 4 shows that on one side of the transmission device 24, a first bevel gear 26 is coupled to the first section 4a of second shaft 4, while on the opposite side, a second bevel gear 27 transmits the power flow in the direction of the tip actuation unit 9 via the second shaft section 4b of the second shaft 4. The spline couplings 28a, b at the input and output of the transmission device 24 enable fast and precise assembly as well as the mounting of manufacturing tolerances, which are particularly important for variable loads on the wing structure. This ensures that the second shaft 4 is always correctly aligned and guided to the tip actuation unit 9 without power losses, despite possible spatial displacements within the latching unit 7. In summary, Fig. 4 illustrates that the transmission device 24 acts as a central element in the latching unit 7 by directing the second shaft 4 through the latching unit 7 via the internal gear unit 17 and spline couplings 28a, b.

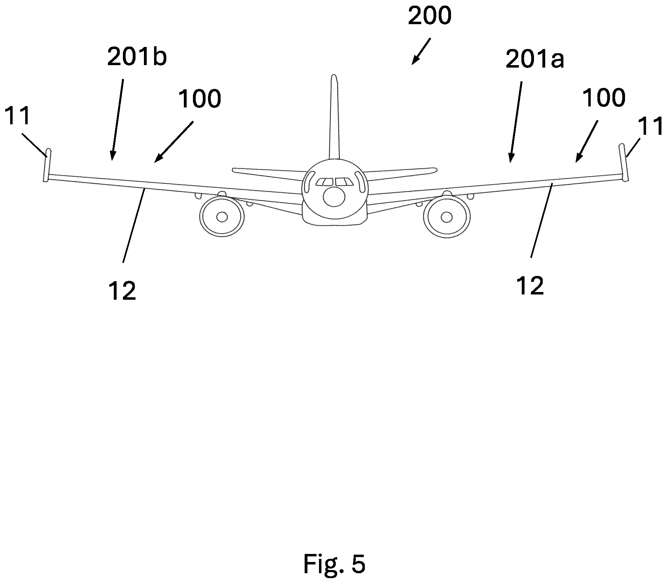

Fig. 5 schematically depicts an aircraft 200 according to an embodiment of the invention. The aircraft 200 is provided with wings 201a, b. The wings 201a, b comprises a fixed wing part 12 attached to the fuselage 202 and a foldable wing tip 11. The foldable wing tip 11 is moveable relative to the fixed wing part 12 between a flight configuration for use during flight, and a ground configuration, as shown in Fig. 5, for use during ground-based operations. In the ground configuration the wing tip 11 is moved (typically rotated) relative to the fixed wing part 12 such that the span of the wing 201a, b is reduced. Thus, the aircraft 200 can adhere to airport operating rules yet benefit from the larger span in flight. An actuation and latching system 100 according to the invention is installed within each wing 201a, b and adapted to the spatial limitation within the wing design by reducing the number of elements within the system 100 thus reducing space requirements and system complexity. This reduces weight and facilitates the assembly of the aircraft wings 201a, b.

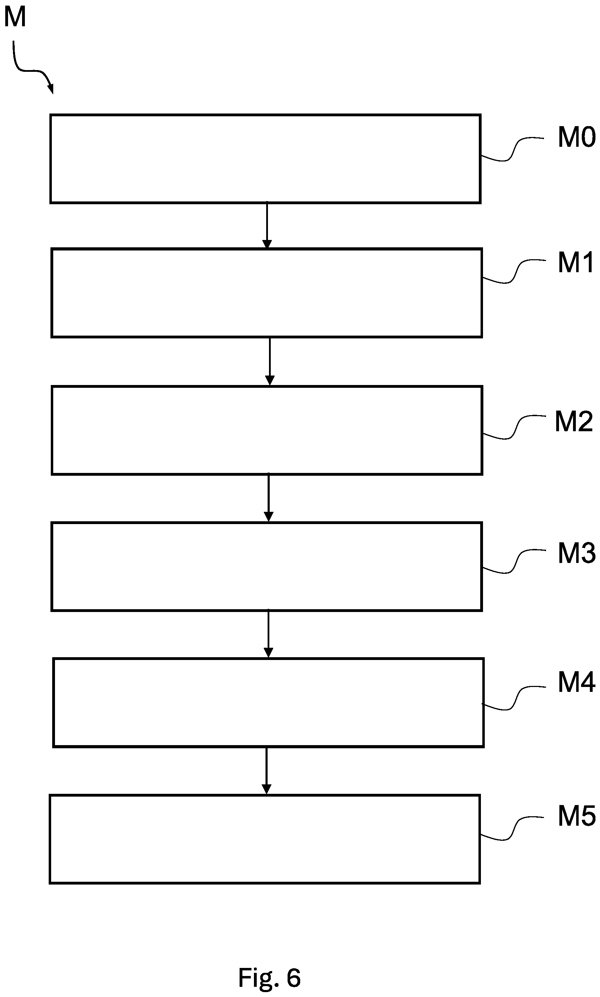

Fig. 6 depicts a flow chart of the method M for extending the wing tip 11 using the system 100 according to the invention. In a first step M0 the first brake unit 6 of the first drive shaft 3 which is primarily connected to the latching mechanism of the latching unit 7 is activated while the second brake unit 10 of the second drive shaft 4, which controls the tip actuation unit 9, is deactivated. This ensures that initially only the tip actuation unit 9 is released, so that the wing tip 11 can be set in motion in a controlled manner. In the next step M1 the appropriate impulse is transmitted to the tip actuation unit 9, causing the wing tip 11 to move from the retracted to the extended position. Therein, the precise control by the drive unit 100 ensures a smooth, controlled movement and minimises mechanical vibrations. After the desired position has almost been reached, a switchover occurs in step M2 and the second brake unit 10 of the second drive shaft 4 is now activated, while the first brake unit 6 of the first drive shaft 4 is deactivated. This means that the drive thrust is now specifically transmitted to the latching unit 7 to initiate the latching process. With the drive power activated in the latching unit 7, the latching bolts 8a, b are positioned in the lug stacks 14 of the hinge levers 5 in step M3. This process is precisely configured by the simultaneous use of the integrated latching actuators 19a, b and their mechanical components, such as hollow screw shafts 22a, b and latching means. Once the latching bolts 8a, b are latched in their intended position, latching position sensors 41a, b provide a clear signal to the control unit 13 in step M4. Based on this feedback, the first brake unit 6 of the first drive shaft 3 is reactivated to finally secure the latching position. Finally, the motor 1 of the drive unit 101 - whether hydraulically or electrically operated - is switched off again in step M5. The method combines the extension and latching processes into a single, sequential operation. By switching the brake units 6, 10 between the two drive shafts 3, 4, it is possible to control which part of the system is active - this minimises the risk of uncontrolled movements and ensures a safe state transition. Since only a single motor 1 is used to perform both functions (tip actuation and latching), the number of necessary components is significantly reduced. This results in a weight reduction, lower costs and simplified assembly and maintenance processes. The use of sensory feedback (e.g. via locking position sensors 15a, b, latching position sensors 41a, b, latch drive position sensor 32a, tip drive position sensor 32b and hinge position sensor 40) and targeted brake switching enables redundant and precise monitoring of the folding and latching status. This means that faults can be detected early, and safety measures can be initiated before critical situations arise. The torque is optimally transmitted to the respective function due to the separate control of the two drive shafts 3, 4 and the application of the brake units 6, 10. This ensures that the wing tip 11 is extended without load shifts and then reliably latched.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 1: motor
- 2: differential gear
- 3: first drive shaft
- 4: second drive shaft
- 4a, b: shaft section
- 5: hinge lever
- 6: first brake unit
- 7: latching unit
- 8a, b: latching bolt
- 9: tip actuation unit
- 10: second brake unit
- 11: wing tip
- 12: fixed wing part
- 13: control unit
- 14: lug stack
- 15a, b: locking position sensor
- 16: first gearbox
- 17: internal gearbox unit
- 18: third gearbox
- 19a, b: latching actuator
- 20: connection element
- 21: second gearbox
- 22a, b: hollow screw shaft
- 23a, b: threaded rod
- 24: transmission device
- 25: helical gear unit
- 26: first bevel gear
- 27: second bevel gear
- 28a, b: spline coupling
- 29: locking actuator
- 30: hinge axis
- 31: valve block
- 32a: tip drive position sensor
- 32b: latching drive position sensor
- 33a, b: cam lock
- 34a, b: cam
- 35a, b: locking pin
- 36: fourth gearbox
- 37: geared rotary actuator
- 38a, b: power stage
- 39: safety brake
- 40: hinge position sensor
- 41a, b: latching position sensor
- 100: actuation and latching system
- 101: drive unit
- 102: drive train
- 200: aircraft
- 201a, b: wing
- 202: fuselage
- L: longitudinal axis
- M: method
- M0-M5: method step

## Claims

1. Actuation and latching system (100) in an aircraft wing (201a, b) having a fixed wing part (12) and a wing tip (11) part foldable relative to the fixed wing part (12) about a hinge axis (30) aligned perpendicular to an aircraft wing (201a, b) longitudinal axis (L), comprising:
- at least one tip actuation unit (9) providing an interface between the fixed wing part (12) and the foldable wing tip (11) having hinge levers (5);
- at least one latching unit (7) arranged in the fixed wing part (12), wherein the at least one latching unit (7) comprises two latching bolts (8a, b) displaceable in opposite directions parallel to the hinge axis (30), wherein said latching bolts (8a, b) can be brought into engagement with the hinge levers (5) extending into the latching unit (7);
- a drive unit (101) arranged in the fixed wing part (12) and axially downstream of the latching unit (7) with the drive unit (101) having at least a first drive shaft (3) coupled to the latching unit (7) and a second drive shaft (4) passing through the latching unit (7) and coupled to the tip actuation unit (9); and
- a control unit (13) for controlling the drive unit (101).

2. Actuation and latching system (100) according to claim 1, wherein the drive unit (101) comprises a hydraulic motor (1) provided with a valve block (31) and the control unit (13) and/or an electric motor (1) provided with a motor control electronics.

3. Actuation and latching system (100) according to claim 1 or 2, with the first and second drive shaft (3, 4) each comprising a brake unit (6, 10) arranged in or adjacent to the drive unit (101).

4. Actuation and latching system (100) according to any of claims 1 to 3, wherein the drive unit (101) comprises a differential gear (2) that allows torque distribution between the first and second shaft (3, 4), and wherein the differential gear (2) preferably comprises an overload protection device in particular comprising one of a slip clutch and a torque limiter.

5. Actuation and latching system (100) according to any of claims 1 to 4, with the latching unit (7) comprising at least two latching actuators (19a, b) each having a hollow screw shaft (22a, b) connected to the latching bolts (8a, b), wherein the hollow screw shaft (22a, b) is configured to axially drive the latching bolts (8a, b) into and out of a latching position in the hinge levers (5) by rotating the hollow screw shaft (22a, b).

6. Actuation and latching system (100) according to claim 5, wherein each of the latching actuators (19a, b) comprises a first locking mechanism provided with a spring-loaded cam lock (33a, b) coupled to a locking actuator (29) and arranged perpendicular to the hollow screw shaft (22a, b) with the cam lock (33a, b) configured to lock the latching bolt (8a, b) by rotating a rotatable cam (34a, b) into a locking position at the hollow screw shaft (22a, b) and/or a second locking mechanism provided with a spring-loaded locking bolt (35a, b) moveable in a direction perpendicular to the latching bolt (8a, b) and each locking mechanism being configured to lock the latching bolt (8a, b) in a latched position.

7. Actuation and latching system (100) according to claim 6, with each of the first and second locking mechanisms comprising at least one locking position sensor (15a, b) configured to detect a locked and unlocked position of the cam lock (34) and/or the locking bolt (35).

8. Actuation and latching system (100) according to any one of claims 1 to 7, wherein the second drive shaft (4) comprises a first shaft section (4a) extending between the drive unit (101) and the latching unit (7) and a second shaft section (4b) extending between the latching unit (7) and the tip actuation unit (9), wherein an internal gear unit (17) is provided in the latching unit (7) comprising a helical gear (25) positioned concentrically with the latching actuators (19a, b) and configured to mesh with bevel gears (26, 27) at each of the first and the second shaft section (4a, b) abutting with the internal gear unit (17).

9. Actuation and latching system (100) according to any one of claims 1 to 8, wherein the tip actuation unit (9) is provided with at least one geared rotary actuator (37) having at least one attachment element attached to the fixed wing part (12), at least one, preferably at least two hinged output levers (5) connected to the foldable wing tip (11) and at least two independent power stages (38) coupled by a through shaft and a third gearbox (36) connectable to a first end of the through shaft and meshing with a bevel gear at the second shaft (4), wherein the tip actuation unit (9) is configured to move the wing tip (11) from a retracted to an extended position and vice versa.

10. Actuation and latching system (100) according to claim 9, wherein the tip actuation unit (9) comprises at least one safety brake (39) attached to a second end of the through shaft and wherein the safety brake (39) is in particular configured as a friction disc brake or a tooth clutch brake allowing for dynamic braking operation.

11. Actuation and latching system (100) according to any one of claims 1 to 10, wherein the hinge axis (30) is provided with a hinge position sensor (40).

12. Actuation and latching system (100) according to any one of claims 1 to 11, wherein a latching drive position sensor (32a) is provided at the first drive shaft (3) and a tip drive position sensor (32b) is provided at the second drive shaft (4).

13. Method for extending the foldable wing tip (11) part of an aircraft wing (201a, b) comprising the actuation and latching system (100) according to any one of claims 1 to 12, from a retracted position into an extended position, comprising:
- engaging the first brake unit (6) of the first drive shaft (3) and disengaging the second brake unit (10) of the second drive shaft (4);
- driving the tip actuation unit (9) to move the foldable wing tip (11) part from the retracted position to the extended position;
- engaging the second brake unit (10) of the second drive shaft (4) and disengaging the first brake unit (6) of the first drive shaft (3);
- driving the latching unit (7) and moving the latching bolts (8a, b) into the hinge levers (5), in particular into lugs or lug stacks (14) provided therein;
- engaging the first brake unit (6) of the first drive shaft (3) after receiving a latching position signal from the latching drive position sensors (32a) in the control unit (13) and/or the locking position sensors (15a, b) of the locking mechanisms at the latching bolts (8a, b); and
- depowering the hydraulic or electrical motor (1).

14. Aircraft wing (201a, b) having a fixed wing part (12) and a wing tip (11) part foldable relative to the fixed wing part (12) and comprising an actuation and latching system (100) according to any one of claims 1 to 12.

15. Aircraft (200) having an aircraft wing (201a, b) according to claim 14.
